Europäisches Patentamt

European Patent Office

Office européen des brevets

(19)

(11) Numéro de publication : **0 187 063**
**B1**

(12) **FASCICULE DE BREVET EUROPÉEN**

(45) Date de publication du fascicule du brevet :
23.03.88

(21) Numéro de dépôt : 85402258.9

(22) Date de dépôt : 20.11.85

(51) Int. Cl.⁴ : **B 60 T   8/32**, B 60 K  28/16,
B 60 G  17/00, B 62 D   6/00,
G 01 P   3/44

(54) Dispositif électronique d'acquisition des signaux périodiques asynchrones.

(30) Priorité : 27.11.84 FR 8418043

(43) Date de publication de la demande :
09.07.86 Bulletin 86/28

(45) Mention de la délivrance du brevet :
23.03.88 Bulletin 88/12

(84) Etats contractants désignés :
DE GB IT

(56) Documents cités :
EP-A- 0 115 202
FR-A- 2 509 242
GB-A- 2 127 507
US-A- 4 184 203
ELECTRONIC TECHNOLOGIES AND SYSTEMS FOR
COMMERCIAL VEHICLES OF THE 80s, SP-505,
novembre 1981, pages 1-7, SAE Inc., Warrendale, US;
L. SMITH: "Microcomputer technology for truck and
vehicle applications"
PATENTS ABSTRACTS OF JAPAN, vol. 6, no. 256 (M-
179) [1134], 15 décembre 1982, page 112 M 179; & JP -
A - 57 151 455 (NISSAN JIDOSHA K.K.) 18-09-1982

(73) Titulaire : Bendix Electronics S.A.
Avenue du Mirail, B.P. 1149
F-31036 Toulouse Cedex (FR)

(72) Inventeur : Nozeran, Jean-Marc
105, rue Roquemaurel (Bât. B)
F-31300 Toulouse (FR)
Inventeur : Villevielle, Jean-Marc
39, rue d'Avranches
F-31200 Toulouse (FR)
Inventeur : Nauleau, Serge
105, rue Roquemaurel
F-31300 Toulouse (FR)

(74) Mandataire : Poidatz, Emmanuel et al
Division Technique Service Brevets Bendix Europe
126, rue de Stalingrad
F-93700 Drancy (FR)

## Description

La présente invention a pour objets des dispositifs électroniques d'acquisition des signaux périodiques asynchrones à l'aide d'un microprocesseur unique. Ces dispositifs sont destinés essentiellement, sur véhicules automobiles ou utilitaires à être intégrés dans des systèmes électroniques d'automatisme et/ou de sécurité tels que des systèmes d'antiblocage des roues lors du freinage, de direction assistée, de suspension dite contrôlée. Dans ce qui suit et pour fixer les idées, on se référera à l'application aux systèmes d'antiblocage faisant appel à la mesure des vitesses des différentes roues. La transposition à d'autres applications à partir de ces mêmes paramètres et/ou d'autres est du domaine de l'homme de l'art et ne sort pas du cadre de la présente invention.

On notera en particulier qu'en ce qui concerne les vitesses des roues, s'il existe dans l'art antérieur des dispositifs électroniques d'acquisition, ils utilisent une chaîne de mesure pour deux vitesses ce qui nécessite deux chaînes pour quatre roues et l'on sort des dimensions standards des boîtiers connus si l'on doit équiper un véhicule à plus de quatre roues, par exemple un véhicule utilitaire à six roues.

Toujours pour fixer les idées, on traitera ici à titre d'exemple du cas de ces véhicules utilitaires à six roues qui sont de plus en plus courants sur le marché et pour lesquels les exigences de sécurité et/ou d'automatisme sont de plus en plus marquées.

On signalera que les informations de vitesse correspondent à des gammes de fréquences allant approximativement de 0 à 1,2 kHz pour les utilitaires à plus de quatre roues et de 0 à 1,8 KHz pour les véhicules à quatre roues.

Il faut également noter que l'on se heurte fréquemment à des problèmes qui peuvent de prime abord soulever sinon des incompatibilités, du moins des antagonismes au moins en apparence.

Ainsi, dans le cas de l'application aux systèmes de freinage avec anti-blocage, il faut assurer un compromis entre :
— d'une part une précision importante de mesure des vitesses,
— d'autre part, une réponse rapide,
et ceci quelles que soient les périodes des signaux. On se trouve donc amené à mesurer chaque période séparant deux fronts de même nature (croissant ou décroissant) sans omettre aucune information sur ces fronts.

Or comme on l'a déjà souligné, la capacité maximale d'un boîtier standard ne permet que deux chaînes de mesure de deux vitesses par circuit spécialisé (microprocesseurs ou compteurs spécifiques, essentiellement), d'où la limitation à quatre roues, ce qui est insuffisant sur les véhicules utilitaires à plus de quatre roues.

La présente invention a pour but de réaliser l'acquisition et le traitement en temps réel de signaux périodiques asynchrones et en particulier en nombre supérieur à quatre, en ne faisant appel qu'à un seul circuit spécialisté tel un microprocesseur pouvant être classique et à un faible volume de circuits externes. Grâce à l'invention, on parvient à acquérir, avec un microprocesseur 8 bits de type classique, jusqu'à 8 signaux périodiques asynchrones ce qui en pratique se traduit par l'acquisition de 1 à 8 signaux de ce type.

Dans l'exemple qui en sera donné ci-après, lorsqu'il est appliqué à un système d'anti-blocage à 6 roues, on peut recourir à une surface de circuit imprimé de dimension réduite implanté dans un seul boîtier de taille standard et avec un seul microprocesseur 8 bits classique.

La présente invention a donc essentiellement pour objet des dispositifs d'acquisition et de traitement de signaux de mesure périodiques asynchrones, de préférence au nombre de 1 à 8, et, présentant une entrée unique de mesure de temps (ou « timer ») d'un microprocesseur unique ou d'un circuit spécialisé unique, qui est utilisée pour le traitement de mesure commun de tous les signaux occurrents. Ces dispositifs permettent d'acquérir et de calculer en temps réel la fréquence de signaux périodiques quelconques asynchrones, l'utilisation d'une circuiterie externe particulière et de l'entrée de mesure du temps du microprocesseur ce qui entraîne une grande précision de mesure et un court temps de réponse.

Ces dispositifs peuvent en particulier s'appliquer à de nombreux systèmes tels que des systèmes d'antiblocage pour véhicules légers ou industriels, des systèmes électroniques d'assistance à la direction, ou des systèmes électroniques d'assistance à la suspension pour mesurer des vitesses telles que les vitesses des roues des véhicules.

Dans ces dispositifs, on peut acquérir et traiter de 1 à 8 signaux asynchrones périodiques de quelque nature que ce soit, les plages de fréquences mesurables étant inversement proportionnelles au nombre de signaux mesurés avec ladite entrée unique de mesure dans le temps. Avec un microprocesseur 8 bits utilisant une horloge de base de 1 MHz, la fréquence maximale pour un signal est ainsi de l'ordre de 7,2 KHz.

A cette fin l'invention propose un dispositif d'acquisition et de traitement de N signaux de mesure périodiques quelconques et asynchrones, caractérisé par le fait qu'il comprend un ensemble de N bascules de synchronisation (B1) recevant lesdits signaux de mesure, suivi d'un ensemble de N bascules de mémorisation (B2) susceptibles de mémoriser les occurrences des signaux de mesure transmises par les bascules de synchronisation et dont la sortie attaque un circuit spécialisé par l'intermédiaire d'un ensemble de type porte ET à N entrées, les N bascules de synchronisation (B1) étant échantillonnées par un système à bascule (B4) à partir de l'horloge dudit circuit spécialisé et les N bascules de mémorisation (B2) étant réinitialisées par un système automatique à bascule (B3) à partir de cette même horloge.

Pour mieux faire comprendre les caractéristiques techniques et les avantages de la présente invention, on va en décrire un exemple de réalisation étant bien entendu que celui-ci n'est pas limitatif quant à son mode de mise en œuvre et aux applications qu'on peut en faire.

On se reportera aux figures suivantes qui représentent schématiquement :

La figure 1 un diagramme bloc d'un dispositif conforme à l'invention ;

La figure 2 un synoptique de l'ensemble du dispositif conforme à l'invention ;

La figure 3 un diagramme dans le temps des signaux d'échantillonnage et de réinitialisation ;

La figure 4 un chronogramme d'ensemble des signaux principaux ;

La figure 5 est une courbe de répartition des erreurs maximales en fonction de la fréquence ;

La figure 6 est un diagramme bloc du microprocesseur MC 6801 fabriqué par la société MOTOROLA et utilisé dans l'exemple de réalisation de la figure 1 (microprocesseur MP).

Dans ce qui suit et pour simplifier, on considèrera que les signaux de mesure périodiques ont été mis en forme dans un étage précédent de tout type adéquat et sont donc des signaux compatibles en niveau avec la logique transistor transistor (TTL) ou semiconducteur oxyde métal complémentaire (CMOS). A titre d'exemple non limitatif ces signaux de mesure appelés ci-après signaux de vitesse, sont représentatifs de la vitesse instantanée d'une roue d'un véhicule.

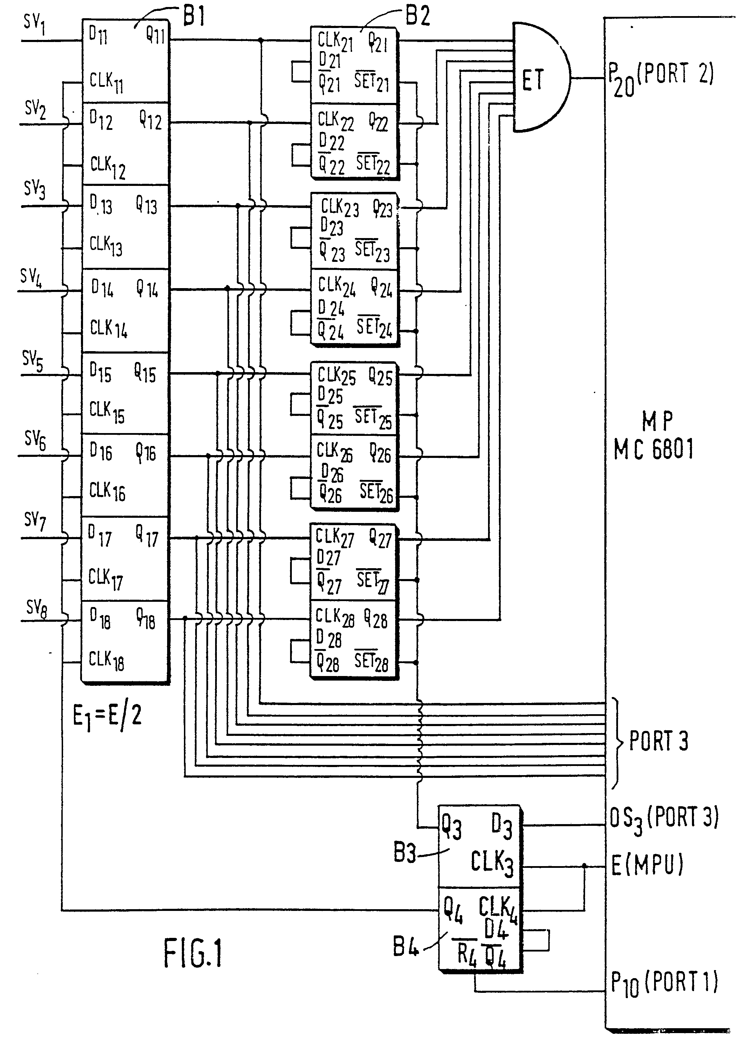

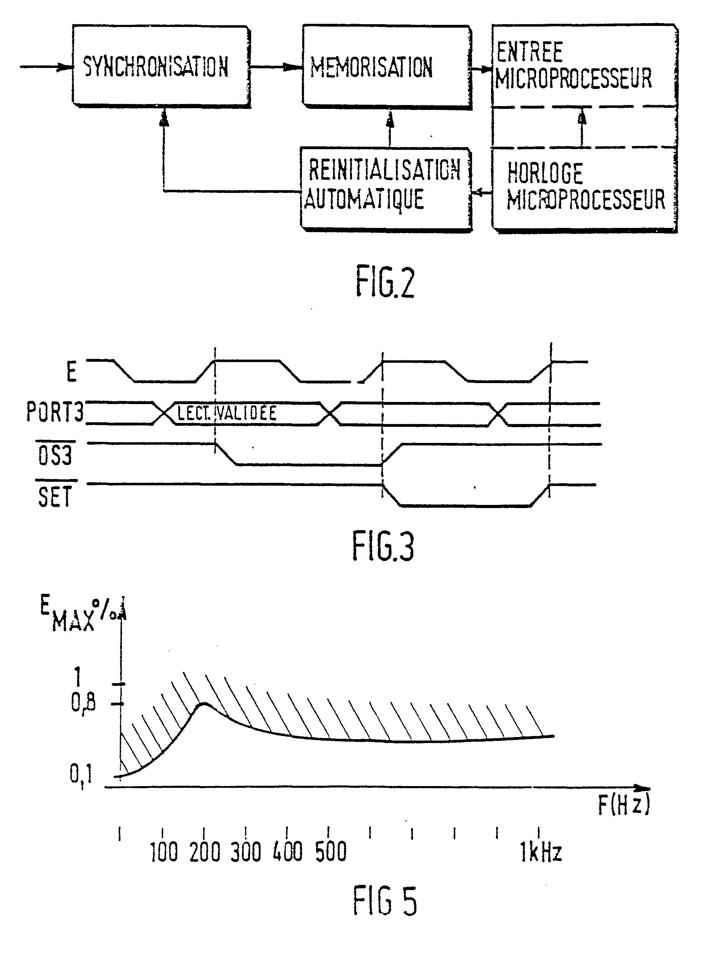

On partira du cas d'un seul signal de vitesse SV1 (figure 1) pour en décrire le traitement puis on se placera (à titre d'exemple non limitatif) dans le cas de huit signaux non simultanés (SV1 à SV8, figure 1). Le signal de vitesse SV1 mis en forme entre en D11 dans un étage de synchronisation (figure 1 et 2) constitué par la bascule B1 à montage type D (c'est-à-dire normalement mise en œuvre par le front montant d'un signal d'horloge) échantillonnée en CLK11 à partir de l'horloge E du microprocesseur MP à une fréquence E1 égale à la moitié de celle E de l'horloge.

De la sorte, à chaque front montant du signal parvenant en CLK11, le signal recueilli en Q11 prend la valeur du signal arrivant en D11. Si l'horloge de microprocesseur fonctionne en 1 MHz, E1 est alors de 500 KHz, de sorte que toutes les 2 microsecondes, Q11 est amenée à la même valeur que D11, ce qui assure la synchronisation. Le signal est ensuite traité dans un étage de mémorisation constitué par la bascule B2 à montage type D où il accède par l'entrée d'horloge CLK21. Quand $\overline{SET}21$ est à l'état 0, Q étant à l'état 1 à chaque front montant du signal Q11 arrivant en CLK21, Q21 prend la valeur de D21, puis grâce à la connexion $\overline{Q}$-D, la valeur $\overline{Q}21$. Le front montant est ainsi mémorisé jusqu'à ce que le microprocesseur MP ait traité cette information. La sortie $\overline{Q}21$ de la bascule B2 attaque l'une des entrées de la porte logique ET à 8 entrées (ou l'une des entrées de deux portes logiques ET à 4 entrées) et reste normalement à l'état 1. Lorsqu'apparaît un front montant, Q21 passe de l'état 1 à l'état 0, ce que fait commuter la porte et crée une interruption par le PORT 2-P20 (saisie d'entrée ou « input capture » IC) du microprocesseur MP qui enregistre automatiquement en mémoire l'instant d'occurrence de l'interruption.

Dans le cas du fonctionnement sur 8 vitesses, chaque signal de vitesse SV 1 à 8 attaque chaque bascule de la colonne B1 et le fonctionnement est indentique, la description ci-dessus donnée s'appliquant à n'importe quel autre signal en remplaçant le dernier indice 1 par l'indice du signal correspondant : D11 par D12 à D18, CLK21 par CLK22 à 28 etc.

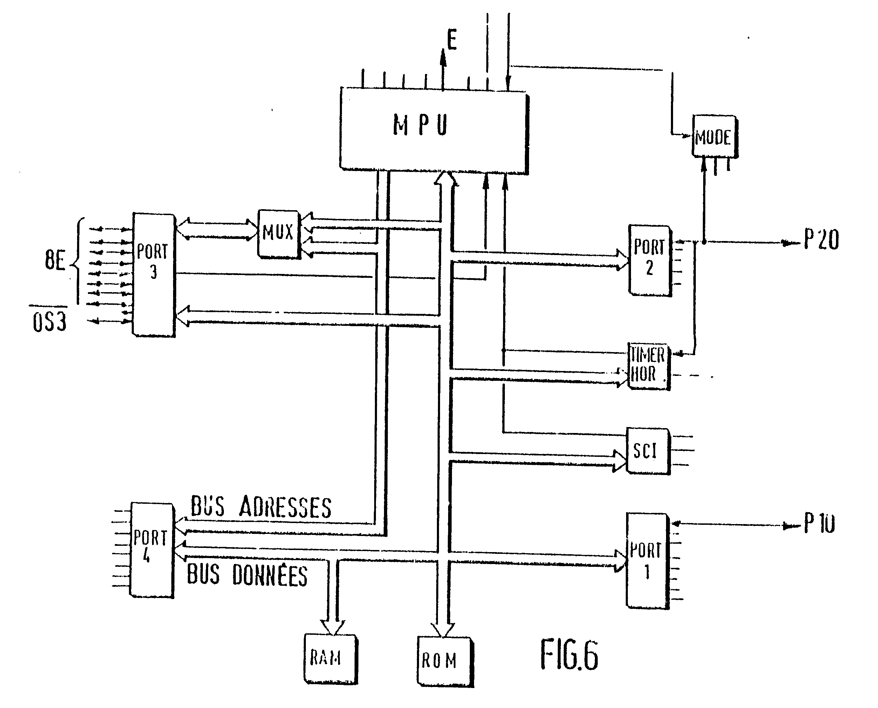

Lorsque le microprocesseur a ainsi enregistré automatiquement en mémoire l'instant d'apparition de l'interruption, il entre dans un processus selon la série d'opérations suivantes ; on se référera à la figure 6 qui représente la partie du schéma du microprocesseur MC 6801 de la société MOTOROLA particulièrement adaptée à la présente invention. On y retrouve sous les mêmes références les divers accès, les autres éléments étant désignés par leurs initiales conventionnelles. Ce schéma est classique.

1) Inhibition de l'horloge d'échantillonnage E/E1

Le PORT 1-P10 = 0 donne l'ordre de réinitialisation (RESET) de la bascule B4 à montage type D, ce qui bloque l'échantillonnage dans la série de bascule B1 des signaux de vitesse via Q4 et CLK11 à 18 de sorte qu'il ne pourra plus y avoir d'interruptions tant que l'échantillonnage ne sera pas à nouveau autorisé.

2) Lecture de l'instant d'apparition de l'interruption

Cette lecture s'effectue sur le registre de saisie d'entrée P20 (PORT 2) du microprocesseur.

3) Lecture de l'état de sortie des bascules B2 et réinitialisation automatique de leurs étages

La lecture sert à détecter sur quel signal (ou sur quels signaux simultanés) a lieu une transition (jusqu'à 8 signaux), la réinitialisation automatique étant effectuée simultanément avec ladite lecture.

Chaque sortie Q11 à Q18 de la série de bascules B1 est reliée à une entrée microprocesseur MP au PORT 3 qui présente huit entrées disponibles 8E (figure 6) ; la lecture au PORT 3 s'accompagne de l'émission d'un signal d'échantillonnage OS3 (également PORT 3) de sortie (utilisé habituellement pour le

**0 187 063**

dialogue entre microprocesseur MP et périphérique par ledit PORT 3, le signal passant à 0 lors d'une lecture et à 1 pour une écriture). Cette émission du signal d'échantillonnage OS3 (PORT3) est séquencée avec l'horloge interne comme le montre la figure 3, OS3 passant de l'état 0 à l'état 1 ou réciproquement à chaque arrivée à l'état 1 du signal E d'horloge (OS3 = OUTPUT STROBE).

De manière à ne réinitialiser les bascules qu'après s'être assuré d'avoir bien lu l'état des sorties, le signal OS3 reçu en D3 est décalé d'un cycle par la bascule B3 à montage type D échantillonnée en CLK3 par l'horloge interne E du mircroprocesseur MP : le signal $\overline{SET}$ ne parviendra en $\overline{SET}21$ à $\overline{SET}28$ des bascules B2 en provenance de Q3 que sur le front montant suivant celui de l'horloge (figure 3).

4) Autorisation de transfert automatique du compteur

5) Validation de l'horloge d'échantillonnage E1 et autorisation des interruptions « réentrantes »

La lecture du registre d'état et de contrôle de la mesure des temps (« timer TR CSR ») autorise le transfert automatique en cas d'interruption de la saisie d'entrée (« input capture »).

Cette lecture est suivie de la mise à l'état 1 de P10 (PORT 1) qui entraîne la validation de l'horloge E1 sur l'étage des bascules B1. A ces instant, le microprocesseur MP détient dans des registres pouvant être sauvegardés les informations suivantes :

index X, X + 1 : instant T1 d'occurrence d'un front montant ;

accumulateur A : image de l'entrée (ou des entrées) sur laquelle (ou sur lesquelles) s'est produit le front montant.

A cet instant, le microprocesseur peut valider de nouvelles interruptions puisque les registre A et X ne sont pas détruits (sauvegarde dans la pile en cas de nouvelle interruption, ce que l'on appelle plus communément systèmes d'interruptions entrant à nouveau ou « Réentrantes »).

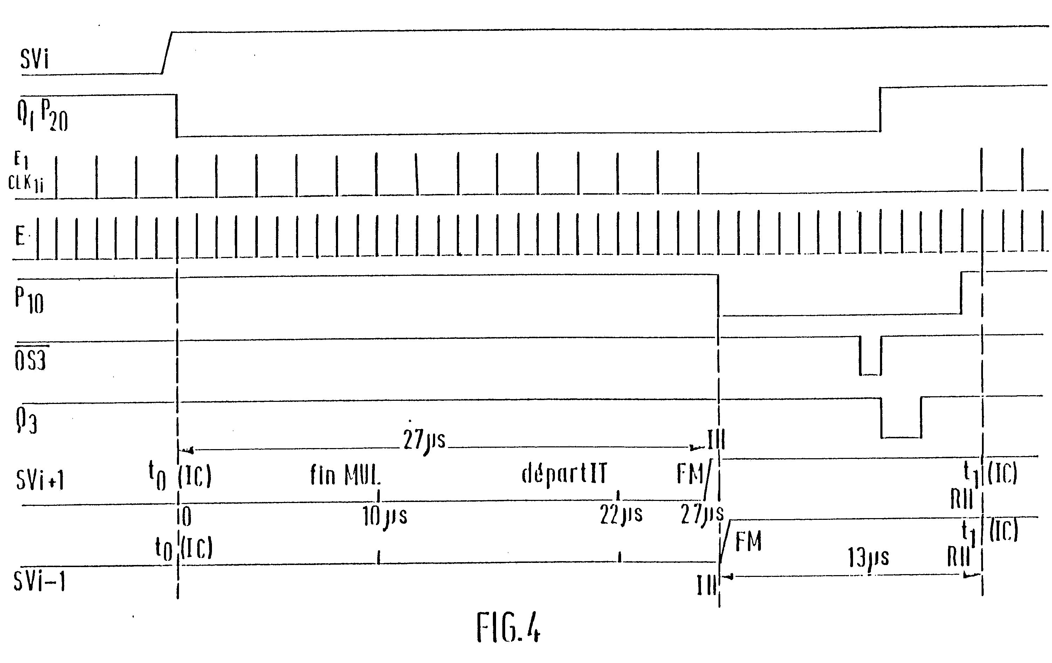

On peut schématiser l'ensemble des opérations en se reportant au chronogramme de la figure 4, soit le signal de vitesse SVi. Il se traduit par la lecture en P20 (PORT 2) d'un signal Q2i qui passe de l'état 1 à l'état 0 au premier front montant de CLK1i suivant l'échelon SVi. Ce signal reviendra à l'état 1 au passage étant 1/état 0 de Q3 ($\overline{SET}$). La fréquence CLK1i = E1 est la moitié de celle de l'horloge E du microprocesseur. Les signaux CLK1i = E1 sont inhibés lorsque P10 passe de l'état 1 à l'état 0 et revalidés quand P10 revient à l'état 1. Il ne peut y avoir d'interruption tant que l'échantillonnage n'est pas autorisé.

Le passage de P10 de l'état 1 à l'état 0 est suivi du passage par l'état 0 du signal d'échantillonnage $\overline{OS3}$ (PORT 3) suivi immédiatement du cycle E près du passage par 0 de Q3 ($\overline{SET}$) et donc de la remise à l'état 1 de Qi. On reviendra ci-après sur les deux derniers éléments ce chronogramme de la figure 4. Si l'on considère l'ensemble de ces opérations, on peut définir les erreurs limites de mesures : elles sont divisées en deux cas selon leur signe.

Erreur négative

En se reportant au chronogramme de la figure 4 (avant dernier graphe) (en microsecondes), c'est le cas lorsque le front FM apparaît juste avant inhibition IH de l'horloge d'échantillonnage, alors que l'interruption a eu lieu au tout début d'une instruction MUL (la plus longue du programme). On compte 10 μs de retard entre le temps t0 de la saisie d'entrée (input capture IC), 12 μs pour le départ en interruption et 5 μs pour le début de programme d'interruption avant inhibition, ce qui donne 27 μs d'erreur négative.

Erreur positive

En se reportant au chronogramme de la figure 4 (dernier graphe), c'est le cas du front FM apparaissant juste après inhibition IH de l'horloge, ce qui sera pris en compte avec un redart dû au programme d'interruption c'est-à-dire jusqu'à revalidation de l'horloge RH soit 13 μs.

Ces évaluations données à titre illustratif se basent sur un microprocesseur dont l'horloge fonctionne à 1 MHz soit une période d'1 μs. Le calcul d'une période T entre deux fronts de même sens résulte ainsi de la différence entre l'instant d'arrivée du premier et celui du second : elle s'effectue donc dans le présent exemple à 27 + 13 = 40 μs près.

On peut en déduire le degré de précision de l'évaluation de la vitesse sur la base des fréquences/périodes ainsi déterminées. L'horloge interne du microprocesseur détermine des fenêtres de mesures consécutives, soit 10 ms, pendant la durée d'une telle fenêtre, l'instant d'occurrence du premier front T1 est mémorisé et le nombre de fronts successifs est compté jusqu'au Nième et dernier tN apparaissant dans la fenêtre.

La période moyenne est donc :

$$tm = \frac{tN - t1}{N - 1}.$$

L'erreur relative maximale commise sur cette période moyenne est donc le rapport entre l'erreur absolue maximale et la durée minimale entre le 1er et le dernier front. Dans le pire des cas, c'est-à-dire

4

lorsque la période du signal est légèrement supérieure à 5 ms, ce qui ne donne que deux fronts dans une fenêtre de 10 ms (N = 2, N — 1 = 1).

$$E_{max} = \frac{40\ \mu s}{5\ ms} = 0,8\ \% \ .$$

On peut ainsi calculer l'erreur maximale en fonction de la fréquence (figure 5) : elle se tient en pratique entre 0,1 et 0,8 %. Cette dernière valeur correspondant au cas le plus défavorable. Le domaine d'erreur est donc compris entre la courbe de la figure 5 et l'axe des abscisses.

On constate ainsi, comme le confirme l'expérience que l'on peut, sous un très faible volume avec un microprocesseur unique classique, suivre et traiter huit vitesses différentes et les calculer en temps réel avec de faibles erreur. On utilisera donc les données emmagasinées dans le microprocesseur et les vitesses calculées en temps réel comme base de calcul pour les diverses applications mentionnées plus haut (antiblocage des roues du véhicule, direction assistée, suspension contrôlée, antidérapage et autres). On remarquera également en se reportant à la figure 1 que l'on peut monter sur une même carte 1 circuit à 8 bascules montage type D, (B1), 5 circuits double bascules montage type D (B2, B3-B4) une porte ET à huit entrées et le microprocesseur MP ; comme on l'a mentionné, le MC 6801 de la société MOTOROLA (figure 6) se révèle particulièrement adapté et simple et vient s'inscrire aisément dans l'ensemble conforme à la présente invention. Il est néanmoins possible de faire appel à d'autres types de microprocesseurs du commerce dès lors qu'ils répondent aux mêmes fonctions dans des conditions au moins équivalentes ou même à d'autres circuits spécialisés tels que des compteurs spécifiques.

Il est évident que l'on peut imaginer de nombreuses variantes (deux portes ET à 4 entrées chaque au lieu d'une à 8 entrées, par exemple) sans sortir du cadre de la présente invention. On soulignera également, que ces dispositifs électriques sont de préférence réalisés en logique rapide.

On remarquera pour finir, que le nombre de signaux traités par le dispositif selon l'invention n'est pas limité à 8. Cependant les standards des composants et circuits intégrés, aujourd'hui disponibles rendent particulièrement intéressante son application à l'acquisition de 1 à 8 signaux distincts (tant du point de vue de la réalistion du circuit, que du coût et du nombre des composants).

## Revendications

1. Dispositif d'acquisition et de traitement de N signaux de mesure périodiques quelconques et asynchrones, caractérisé par le fait qu'il comprend un ensemble de N bascules de synchronisation (B1) recevant lesdits signaux de mesure suivi d'un ensemble de N bascules de mémorisation (B2) susceptibles de mémoriser les occurrences des signaux de mesure transmises par les bascules de synchronisation et dont la sortie attaque un circuit spécialisé (MP) par l'intermédiaire d'un ensemble de type porte Et à N entrées, les N bascules de synchronisation (B1) étant échantillonnées par un système à bascule (B4) à partir de l'horloge dudit circuit spécialisé (MP) et les N bascules de mémorisation (B2) étant réinitialisées par un système automatique à bascule (B3) à partir de cette même horloge.

2. Dispositif selon la revendication 1, caractérisé par le fait que le circuit spécialisé (MP) est un microprocesseur.

3. Dispositif selon l'une des revendications 1 ou 2, caractérisé par le fait que ledit circuit spécialisé (MP) présente une seule entrée de mesure du temps (P20) à la sortie de la porte ET utilisée pour l'acquisition simultanée de toutes les occurrences de signaux de mesures.

4. Dispositif selon l'une des revendications 1 à 3, caractérisé par le fait que les bascules sont à montage de type D, soit normalement mises en œuvres par le front montant d'un signal d'horloge.

5. Dispositif selon la revendication 4, caractérisé par le fait que les bascules de synchronisation (B1) sont échantillonnées en recevant les signaux d'horloge à l'entrée CLK et les signaux de mesure à l'entrée D.

6. Dispositif selon la revendication 5, caractérisé par le fait que les bascules de mémorisation (B2) reçoivent à l'entrée CLK le signal de mesure issu en Q des bascules correspondantes de synchronisation (B1), chacune de leurs sorties Q étant reliée à l'entrée D correspondante et leurs sorties Q étant reliées à une entrée de porte ET dudit ensemble à N entrées.

7. Dispositif selon l'une des revendications 1 à 6, caractérisé par le fait que les bascules de synchronisation (B1) sont échantillonnées à une fréquence moitié de celle de l'horloge.

8. Dispositif selon l'une des revendications 1 à 7, caractérisé par le fait que la réinitialisation automatique des bascules de mémorisation (B2) est déclenché dès la lecture effectuée.

9. Dispositif selon l'une des revendications 2 à 8, caractérisé par le fait que le microprocesseur est du type 6801, le signal OS3 (OUTPUT STROBE) dudit microprocesseur étant utilisé pour réinitialiser automatiquement l'ensemble de bascules de mémorisation de l'occurrence des signaux de mesure issus de l'ensemble de bascules de synchronisation (B1).

10. Dispositif selon l'une des revendications 1 à 9, caractérisé en ce que le nombre de signaux traités N est compris entre 1 et 8 inclusivement.

11. Dispositif selon l'une des revendications 1 à 10, caractérisé en ce qu'un élément dudit circuit spécialisé calcule en temps réel les vitesses correspondantes aux signaux de mesure à partir des données mises en mémoire dans ledit dispositif.

12. Dispositif selon l'une des revendications 1 à 10, caractérisé par le fait qu'il est appliqué à un système d'antiblocage des roues d'un véhicule automobile lors du freinage.

13. Dispositif selon l'une des revendications 1 à 10, caractérisé par le fait qu'il est appliqué à un système de direction assistée d'un véhicule automobile.

14. Dispositif selon l'une des revendications 1 à 10, caractérisé par le fait qu'il est appliqué à un système de suspension contrôlée d'un véhicule automobile.

15. Dispositif selon l'une des revendications 1 à 10, caractérisé par le fait qu'il est appliqué à un système antipatinage à l'accélération des roues motrices d'un véhicule automobile.

## Claims

1. Device for the acquisition and processing of N number of any asynchronous and periodic measuring signals, characterized in that it includes a set of N synchronization flip-flops (B1) receiving the said measuring signals followed by a set of N storage flip-flops (B2) capable of storing the occurrences of the measuring signals transmitted by the synchronization flip-flops and whose output is applied to a dedicated circuit (MP) via an N-input AND gate type assembly, the N synchronization flip-flops (B1) being sampled by a flip-flop system (B4) from the clock of the said dedicated circuit (MP) and the N storage flip-flops (B2) being reset by an automatic flip-flop system (B3) from this same clock.

2. Device according to Claim 1, characterized in that the dedicated circuit (MP) is a microprocessor.

3. Device according to either of Claims 1 or 2, characterized in that the said dedicated circuit (MP) has a single timer input (P20) at the output of the AND gate used for the simultaneous acquisition of all the occurrences of measuring signals.

4. Device according to one of Claims 1 to 3, characterized in that the flip-flops are D-type, or normally operated by the rising edge of a clock signal.

5. Device according to Claim 4, characterized in that the synchronization flip-flops (B1) are sampled by receiving the clock signals at the CLK input and the measuring signals at the D input.

6. Device according to Claim 5, characterized in that the storage flip-flops (B2) receive in the CLK input the measuring signal coming from Q of the corresponding synchronization flip-flops (B1), each of their Q outputs being connected to the corresponding D input and their Q outputs connected to an AND gate input of the said set of N inputs.

7. Device according to one of Claims 1 to 6, characterized in that the synchronisation flip-flops (B1) are sampled at a frequency which is half that of the clock.

8. Device according to one of Claims 1 to 7, characterized in that the automacit resetting of the storage flip-flops (B2) is triggered as soon as reading is complete.

9. Device according to one of Claims 2 to 8, characterized in that the microprocessor is a type 6801, the OS3 (OUTPUT STROBE) signal of the said microprocessor being used to automatically reset the flip-flop assembly storing the occurrences of measuring signals coming from the synchronization flip-flop assembly B1.

10. Device according to one of Claims 1 to 9, characterized in that the number of processed signals N is between 1 and 8 inclusive.

11. Device according to one of Claims 1 to 10, characterized in that one element of the said dedicated circuit computes the velocities corresponding to the measuring signals in real time from data stored in the said device.

12. Device according to one of Claims 1 to 10, characterized in that it is applied to an antilocking of the wheels of a motor vehicle system when braking.

13. Device according to one of Claims 1 to 10, characterized in that it is applied to an assisted steering system of a motor vehicle.

14. Device according to one of Claims 1 to 10, characterized in that it is applied to a controlled suspension system of a motor vehicle.

15. Device according to one of Claims 1 to 10, characterized in that it is applied to an anti-skid system on accelaration of the driving wheels of a motor vehicle.

## Patentansprüche

1. Vorrichtung zum Erfassen und Verarbeiten von beliebigen periodischen und asynchronen N Meßsignalen, dadurch gekennzeichnet, daß sie eine Anordnung von N Synchronisations-Kippgliedern (B1) zum Empfang der Meßsignale enthält, an die sich eine Anordnung von N Speicher-Kippgliedern (B2) anschließt, die das Auftreten der von den Synchronisations-Kippgliedern übertragenen Meßsignale speichert und deren Ausgang an einen Spezialkreis (MP) angeschlossen ist, und zwar über eine UND-Toreinrichtung mit N Eingängen, wobei die N Synchronisations-Kippglieder (B1) von einer Kippschaltung (B4) ausgehend von dem Zeitgeber des Spezialkreises (MP) angesteuert werden und die N Speicher-Kippglieder (B2) von einer selbsttätigen Kippschaltung (B3) ausgehend von dem gleichen Zeitgeber reinitialisiert werden.

2. Vorrichtung nach Anspruch 1, dadurch gekennzeichnet, daß der Spezialkreis (MP) ein Mikroprozessor ist.

3. Vorrichtung nach Anspruch 1 oder 2, dadurch gekennzeichnet, daß der Spezialkreis (MP) einen einzigen Eingang (P20) zur Zeitmessung am Ausgang des UND-Tores aufweist, der zum gleichzeitigen Erfassen des Auftretens sämtlicher Meßsignale verwendet wird.

4. Vorrichtung nach einem der Ansprüche 1-3, dadurch gekennzeichnet, daß die Kippglieder vom Typ D sind, die normalerweise durch die ansteigende Flanke eines Zeitgebersignals betätigt werden.

5. Vorrichtung nach Anspruch 4, dadurch gekennzeichnet, daß die Synchronisations-Kippglieder (B1) dadurch angesteuert werden, daß sie die Zeitgebersignale am Eingang CLK und die Meßsignale am Eingang D empfangen.

6. Vorrichtung nach Anspruch 5, dadurch gekennzeichnet, daß die Speicher-Kippglieder (B2) am Eingang CLK das Meßsignal empfangen, das bei Q von den entsprechenden Synchronisations-Kippgliedern (B1) abgegeben wurde, wobei jeder ihrer Ausgänge Q mit dem entsprechenden Eingang D verbunden ist und ihre Ausgänge Q mit einem Eingang des UND-Tores mit N Eingängen verbunden sind.

7. Vorrichtung nach einem der Ansprüche 1-6, dadurch gekennzeichnet, daß die Synchronisations-Kippglieder (B1) mit einer Frequenz angesteuert werden, die halb so groß ist wie die des Zeitgebers.

8. Vorrichtung nach einem der Ansprüche 1-7, dadurch gekennzeichnet, daß das selbsttätige Reinitialisieren der Speicher-Kippglieder (B2) durch die erfolgte Abtastung ausgelöst wird.

9. Vorrichtung nach einem der Ansprüche 2-8, dadurch gekennzeichnet, daß der Mikroprozessor vom Typ 6801 ist, wobei das Signal OS3 (OUTPUT STROBE) des Mikroprozessors dazu benutzt wird, die Anordnung der Speicher-Kippglieder bei Auftreten der Meßsignale, die von der Anordnung der Synchronisations-Kippglieder (B1) abgegeben werden, zu reinitialisieren.

10. Vorrichtung nach einem der Ansprüche 1-9, dadurch gekennzeichnet, daß die Anzahl N der verarbeiteten Signale zwischen Eins und einschließlich Acht liegt.

11. Vorrichtung nach einem der Ansprüche 1-10, dadurch gekennzeichnet, daß ein Element des Spezialkreises in Realzeit die den Meßsignalen entsprechenden Geschwindigkeiten ausgehend von vorgegebenen Größen berechnet, die in den Speicher der Vorrichtung eingegeben wurden.

12. Vorrichtung nach einem der Ansprüche 1-10, dadurch gekennzeichnet, daß sie bei einer Antiblockierbremseinrichtung der Räder eines Kraftfahrzeuges eingesetzt wird.

13. Vorrichtung nach einem der Ansprüche 1-10, dadurch gekennzeichnet, daß sie bei einer Servolenkeinrichtung eines Kraftfahrzeuges eingesetzt wird.

14. Vorrichtung nach einem der Ansprüche 1-10, dadurch gekennzeichnet, daß sie bei einer gesteuerten Aufhängungseinrichtung eines Kraftfahrzeuges eingesetzt wird.

15. Vorrichtung nach einem der Ansprüche 1-10, dadurch gekennzeichnet, daß sie bei einer Antiskatingeinrichtung für die angetriebenen Räder eines Kraftfahrzeuges eingesetzt wird.

FIG.1

FIG.2

FIG.3

FIG 5

FIG.4

FIG.6